# EUROPEAN PATENT SPECIFICATION

(11) **EP 3 745 253 B1**
(45) Date of publication and mention of the grant of the patent: **04.10.2023**
(21) Application number: 19220036.8
(22) Date of filing: 30.12.2019
(51) Int. Cl.: G06F 3/16, G10L 15/22

(54) **VOICE CONTROL METHODS AND APPARATUSES FOR ELECTRONIC DEVICE, COMPUTER DEVICES, AND STORAGE MEDIA**
VERFAHREN UND VORRICHTUNGEN ZUR SPRACHSTEUERUNG FÜR ELEKTRONISCHE VORRICHTUNGEN, COMPUTERVORRICHTUNGEN UND SPEICHERMEDIEN
PROCÉDÉS ET APPAREILS DE COMMANDE VOCALE POUR DISPOSITIF ÉLECTRONIQUE, DISPOSITIFS INFORMATIQUES ET SUPPORT D'ENREGISTREMENT

(30) Priority: 31.05.2019 CN 201910468915
(43) Date of publication of application: 02.12.2020
(73) Proprietor: Baidu Online Network Technology (Beijing) Co., Ltd., Beijing 100085 (CN); Shanghai Xiaodu Technology Co., Ltd., Shanghai 201210 (CN)
(72) Inventor: LUO, Yongxi, Beijing, 100085 (CN); WANG, Shasha, Beijing, 100085 (CN); ZHANG, Gang, Beijing, 100085 (CN)
(74) Representative: advotec.

(56) References cited:
- WO-A1-2018/135753
- US-A1- 2018 322 870

## Description

### TECHNICAL FIELD

The invention relates to the field of artificial intelligence technologies, and more particularly, to a voice control method for an electronic device, a voice control apparatus for an electronic device, a computer device, and a storage medium.

### BACKGROUND

Presently, with rapid development of internet technologies and intelligent devices, a user may interact with an intelligent device through voice to realize his/her requirements. For example, the user may make a dialogue with an intelligent loudspeaker to play music.

In the related art, it requires to wake up the intelligent device before interacting with the intelligent device. That is, an operation of waking up the intelligent device is to be performed each time when the interaction with the intelligent device is performed. Furthermore, during an operation state of the intelligent device, the operation of waking up the intelligent device may stop the current operation state of the intelligent device. Therefore, operations are complex, and the normal operation of the intelligent device may be influenced.

WO 2018/135753 A1 discloses a method and an apparatus for processing a voice-recognition service in an electronic apparatus according to a variety of embodiments of the present invention. The electronic apparatus according the variety of embodiments of the present invention comprises a microphone, memory, and a processor functionally connected to the microphone and memory, wherein the processor can be configured so as to: wake-up on the basis of sensing a wake-up word; process a first task corresponding to a first voice command of a user on the basis of the wake-up; configure a wait period during which a follow-up command can be received on the basis of processing of the first task; sense a second voice command of the user during the wait period; analyze the conversational context on the basis of the first voice command and second voice command; and process a second task on the basis of the results of the analysis.

### SUMMARY

The invention is defined by a method according to claim 1, an apparatus according to claim 7, and a non-transitory computer readable storage medium according to claim 11. Further embodiments are defined by the dependent claims.

### BRIEF DESCRIPTION OF THE DRAWINGS

The above and/or additional aspects and advantages of embodiments of the present disclosure will become apparent and more readily appreciated from the following descriptions made with reference to the drawings, in which:
FIG 1 is a flow chart illustrating a voice control method for an electronic device according to an embodiment of the present disclosure;
FIG 2 is a flow chart illustrating a voice control method for an electronic device according to an embodiment of the present disclosure;
FIG 3 is a block diagram of a voice control apparatus for an electronic device according to an embodiment of the present disclosure;
FIG 4 is a block diagram of a voice control apparatus for an electronic device according to an embodiment of the present disclosure;
FIG 5 is a block diagram of a voice control apparatus for an electronic device according to an embodiment of the present disclosure; and
FIG 6 is a schematic diagram of a computer device according to an embodiment of the present disclosure.

### DETAILED DESCRIPTION

Embodiments of the present disclosure will be described in detail and examples of the embodiments are illustrated in the drawings. The same or similar elements and the elements having same or similar functions are denoted by like reference numerals throughout the descriptions. Embodiments described herein with reference to drawings are explanatory, serve to explain the present disclosure, and are not construed to limit embodiments of the present disclosure.

A voice control method and a voice control apparatus for an electronic device, a computer device, and a storage medium according to embodiments of the present disclosure are described with reference to the drawings hereinafter.

The user may interact with the electronic device through voice. The electronic device may be a robot, an intelligent loudspeaker, an intelligent learning machine and the like, which is not limited herein.

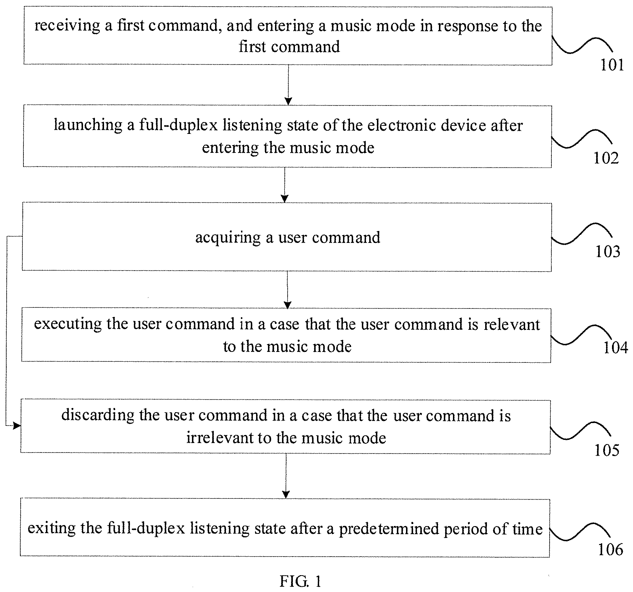

FIG 1 is a flow chart illustrating a voice control method for an electronic device according to an embodiment of the present disclosure.

As shown in FIG 1, the voice control method for an electronic device may include acts in blocks 101 to 106 in the following.

In block 101, a first command is received, and a music mode is entered in response to the first command.

In an embodiment, the first command may be an operation on the electronic device, for example, an operation for pressing a playing button on the electronic device. In an embodiment, the first command may be a voice-based command, for example, if a user says "play Common Jasmine Orange of Jay chou" towards the electronic device, the electronic device enters the music mode and plays "Common Jasmine Orange". It should be understood that the electronic device is in a wake-up state when receiving the first command.

In an application, when the user initiates one voice command, the electronic device enters the music mode to play music and does not listen to voice commands from the user. When the user initiates another voice command, predetermined wake-up words such as "Xiaodu, Xiaodu" are required to be included the voice command, to wake up the electronic device. At this time, the music pauses, and the electronic device listens to and recognizes the user command and performs a response to the user command after recognizing the user command.

Therefore, it may be seen that when the user initiates another voice command, the user is required to wake up the electronic device through the predetermined wake-up words. In this case, voice cost is added for the user, and thus the electronic device seems to be not "intelligent" enough. That is, when the user initiates another voice command, one of a loudspeaker and a microphone, operates. In this case, the loudspeaker is turned off, the playing of the music is paused; the microphone is turned on, and the electronic device listens to and recognizes the user command. Since the loudspeaker is turned off, the user cannot listen to the music continuously. The music pauses once the voice command is initiated, and thus the normal operation of the electronic device is influenced, resulting in a poor experience of the user when using the electronic device.

In order to solve the above problem, according to the voice control method for an electronic device in the present disclosure, in a predetermined period of time after entering the music mode, a full-duplex listening state of the electronic device is turned on, a user command including no wake-up words may be recognized, and the user command is executed in a case that the user command is relevant to the music mode, thereby saving the cost for initiating voice commands by the user, ensuring normal playing of the electronic device, and improving the using experience of the user.

In block 102, a full-duplex listening state of the electronic device is launched after entering the music mode.

In the full-duplex listening state, the electronic device recognizes a user command including no wake-up language. That is, in the full-duplex listening state, a voice recording device of the electronic device and a voice playing device of the electronic device are turned on.

In block 103, the user command is acquired. In detail, a voice signal or voice information is received and recognized to acquire the user command.

In detail, the full-duplex listening state of the electronic device is launched in the predetermined period of time after entering the music mode. The predetermined period of time is selected and set according to applications. In consideration of operation habits of the user and power consumption of the electronic device, the predetermined period of time ranges from 20 seconds to 40 seconds.

In order to further improve the using experience of the user or determine whether a current state is the full-duplex listening state for the user, the user is prompted through patterns or words displayed on the display screen of the electronic device after the full-duplex listening state of the electronic device is launched. For example, a sign pattern of the electronic device is displayed in a colored manner.

In the full-duplex listening state of the electronic device, both the loudspeaker and the microphone operate. When the user initiates the first voice command, the electronic device continuously listens for the predetermined period of time, for example 30 seconds (during this period of time, the music is normally played, thereby not influencing the experience of listening to the music).

The user command may be acquired in the full-duplex listening state through multiple manners as follows.

In a first manner, currently-played voice information of the electronic device is acquired, user voice information is separated from current voice information according to the currently-played voice information, and the user voice information is recognized to acquire the user command.

In a second manner, according to pre-input voiceprint features of the user, user voice information corresponding to the voiceprint features of the user is directly extracted from current voice information, and the user voice information is recognized to acquire the user command.

It should be understood that, in the full-duplex listening state, the user command including no wake-up word may be acquired, and thus the user command is directly recognized. It should be understood that, the user command may be recognized in multiple manners. In an example, after the user voice information or signal is acquired, the user voice information or signal is converted into a text by a voice-text conversion method. Then, processing such as word segmentation or keyword extraction is performed on the user voice information or signal in a form of text, to match a preset command table, thereby acquiring a corresponding target command and completing recognition of the user command.

In block 104, the user command is executed in a case that the user command is relevant to the music mode.

In block 105, the user command is discarded in a case that the user command is irrelevant to the music mode.

In block 106, the full-duplex listening state is exited after a predetermined period of time ends.

In detail, the user command may be relevant to the music mode or may be irrelevant to the music mode. For example, the electronic device enters the music mode to play "Common Jasmine Orange", the user command is recognized as "play a next song" and "increase volume". In this case, the user command may be determined to be relevant to the music mode, and the user command is executed. In another example, the electronic device enters the music mode to play "Common Jasmine Orange" and the user command is recognized as "what's the weather like today", the user command may be determined to be irrelevant to the music mode, and the user command is not executed.

Finally, in order to improve endurance of the electronic device and satisfy the operation requirement of the user, the full-duplex listening state is exited when the predetermined period of time ends.

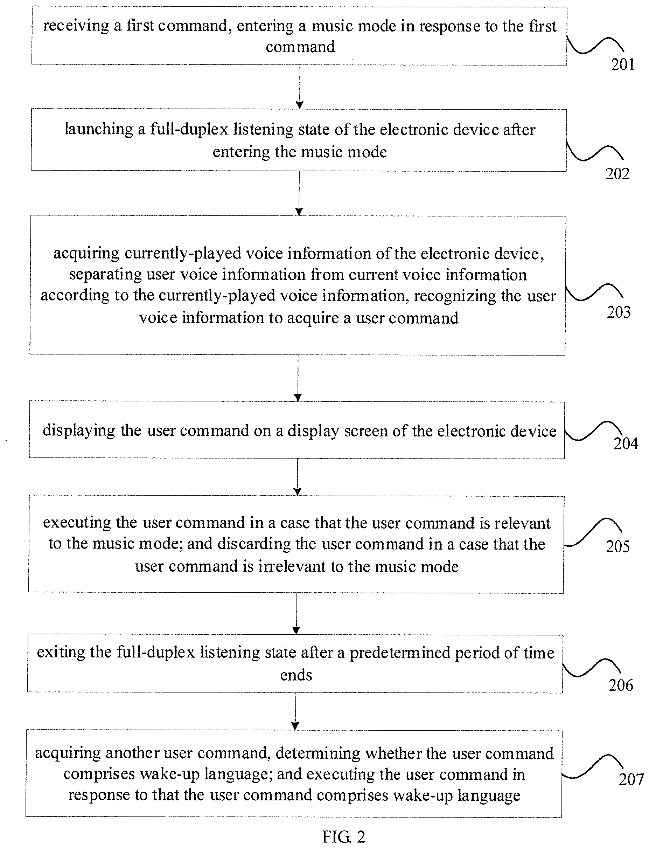

FIG 2 is a flow chart illustrating a voice control method for an electronic device according to an embodiment of the present disclosure.

As shown in FIG 2, the voice control method for an electronic device may include acts in blocks 201 to 207 in the following.

In block 201, a first command is received from a user, and a music mode is entered in response to the first command.

In block 202, a full-duplex listening state of the electronic device is launched after entering the music mode. It should be noted that, blocks 201 to 202 are the same as blocks 101 to 102 in the above embodiment. For specific content, one may refer to the description of blocks 101 to 102, and details are not repeated here.

In block 203, currently-played voice information of the electronic device is acquired, user voice information is separated from current voice information according to the currently-played voice information, the user voice information is recognized to acquire a user command.

It should be understood that, both the loudspeaker and the microphone operate in the full-duplex listening state. That is, the current voice information received by the microphone includes sounds played by the loudspeaker and the user voice information. Therefore, the user voice information is separated from the current voice information according to the currently-played voice information, the user voice information is recognized to acquire the user command, and the user command is recognized, thereby improving accuracy for voice recognition.

In block 204, the user command is displayed on a display screen of the electronic device.

In detail, in order to further improve the experience of the user, the user command is displayed on the display screen of the electronic device. Examples are described as follows.

The user command is displayed with a first font color in a case that the user command is relevant to the music mode; and the user command is displayed with a second font color in a case that the user command is irrelevant to the music mode. The first font color is darker than the second font color. For example, the user command relevant to the music mode is displayed with a blue font, and the user command irrelevant to the music mode is displayed with a gray color.

In a second embodiment, the user command is displayed with a first font size in a case that the user command is relevant to the music mode; and the user command is displayed with a second font size in a case that the user command is irrelevant to the music mode. The first font size is greater than the second font size.

It should be noted that, it is not limited to the font color, the font size and different fonts, and the display modes such as a speed and a location, may be considered.

In block 205, the user command is executed in a case that the user command is relevant to the music mode; and the user command is not executed in a case that the user command is irrelevant to the music mode.

In block 206, the full-duplex listening state is exited after a predetermined period of time.

In detail, the user command may be relevant to the music mode or may be irrelevant to the music mode. For example, the electronic device enters the music mode to play "Common Jasmine Orange", the user command is recognized as "play a next song" and "increase volume". In this case, the user command may be determined to be relevant to the music mode, and the user command is executed. In another example, the electronic device enters the music mode to play "Common Jasmine Orange" and the user command is recognized as "what's the weather like today", the user command may be determined to be irrelevant to the music mode, and the user command is not executed.

Finally, in order to improve the endurance of the electronic device and satisfy the operation requirement of the user, the full-duplex listening state is exited when the predetermined period of time ends.

In block 207, another user command is acquired is recognized; and in response to that the another user command includes wake-up language, and the another user command is executed.

In detail, only the microphone operates after exiting the full-duplex listening state. Therefore, the another user command including wake-up language is acquired, and the user another command is executed.

In this case, when the user initiates a voice command, the voice command is displayed on a screen of the electronic device via a color image. The user may initiate another voice command relevant to music when listening to the music, thereby saving the cost for initiating the voice command by the user without interrupting the music, and thus ensuring that the experience of listening to the music is continuous and complete.

With the voice control method for an electronic device in the embodiment, the first voice command of the user is received, and the music mode is entered in response to the first voice command. The full-duplex listening state of the electronic device is launched in the predetermined period of time after entering the music mode. In the full-duplex listening state, the electronic device recognizes the user command, and the user command includes no wake-up language. In the full-duplex listening state, the user command is acquired, and the first user command is recognized. The user command is executed in the case that the user command is relevant to the music mode. The user command is not executed in the case that the user command is irrelevant to the music mode. The full-duplex listening state is exited when the predetermined period of time ends. In this way, the technical problem in the related art that the operations are complex during voice interaction between the user and the electronic device, and thus the normal operation of the electronic device is influenced and the using experience of the user on the electronic device is poor, is solved. In the predetermined period of time after entering the music mode, the full-duplex listening state of the electronic device is launched, the user command including no wake-up word is directly recognized, and the user command is executed in the case that the user command is relevant to the music mode, thereby saving the cost for initiating the voice command by the user, ensuring the normal playing of the electronic device, and improving the using experience of the user.

In order to implement the above embodiment, a voice control apparatus for an electronic device is provided according to the present disclosure.

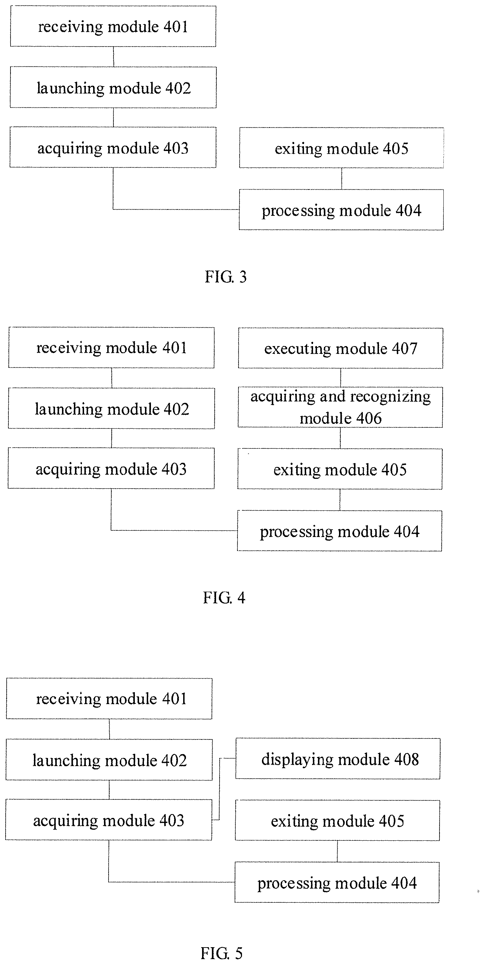

FIG 3 is a block diagram of a voice control apparatus for an electronic device according to an embodiment of the present disclosure.

As shown in FIG 3, the voice control apparatus for an electronic device includes: a receiving module 401, a launching module 402, an acquiring module 403, a processing module 404, and an exiting module 405.

The receiving module 401 is configured to receive a first command, and enter a music mode in response to the first command.

The initiating module 402 is configured to launch a full-duplex listening state of the electronic device after entering the music mod.

In the full-duplex listening state, a voice recording device of the electronic device and a voice playing device of the electronic device are turned on.

The acquiring module 403 is configured to acquire the user command in the full-duplex listening state.

The processing module 404 is configured to execute the user command in a case that the user command is relevant to the music mode.

The processing module 404 is further configured to discard the user command in a case that the user command is irrelevant to the music mode.

The exiting module 405 is configured to exit the full-duplex listening state after a predetermined timer period.

In a possible implementation of the embodiment of the present disclosure, based on FIG 3, as shown in FIG 4, the apparatus further includes an acquiring and recognizing module 406 and an executing module 407.

The acquiring and recognizing module 406 is configured to acquire another user command. The another user command includes wake-up language.

The executing module 407 is configured to execute the another user command in response to that the another user command includes wake-up language.

Based on FIG 3, as shown in FIG 5, the apparatus further includes a displaying module 408.

The displaying module 408 is configured to display the user command on a display screen of the electronic device.

The displaying module 408 is configured to display the user command with a first color in a case that the user command is relevant to the music mode, and display the user command with a second color in a case that the user command is irrelevant to the music mode. The first color is darker than the second color.

The acquiring module 403 is configured to: collect current voice information, in which the current voice information includes user voice information and currently-played voice information; acquire the currently-played voice information of the electronic device; separate the user voice information from the current voice information according to the currently-played voice information; and recognize the user voice information to acquire the user command.

In a possible implementation of the embodiment of the present disclosure, the predetermined period of time ranges from 20 seconds to 40 seconds.

It should be noted, the previous interpretation and illustration for the embodiment of the voice control method for an electronic device also adapts to the voice control apparatus for an electronic device according to the embodiment, and the implementation principle is similar and is not described in detail here.

In order to implement the above embodiment, a computer device is provided according to the present disclosure, which includes a processor and a memory. The processor is configured to execute, by reading executable program codes stored in the memory, programs corresponding to the executable program codes, to implement the voice control method for an electronic device in the above embodiments.

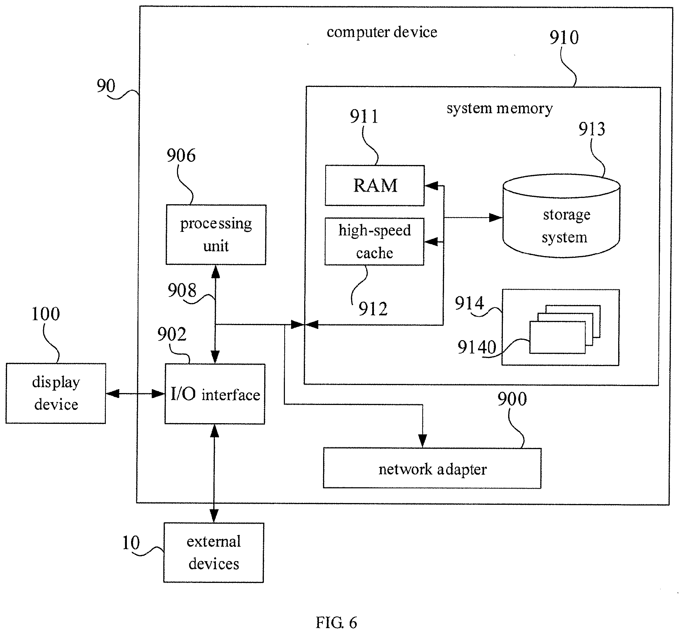

FIG 6 is a schematic diagram illustrating a computer device according to an embodiment of the present disclosure, and shows a block diagram of a schematic computer device 90 adapted to implement the embodiment of the present disclosure. The computer device 90 shown in FIG 6 is schematic, and is not intended to limit the function and usage for the embodiment of the present disclosure.

As shown in FIG 6, the computer device 90 is implemented as a general-purpose computer device. The computer device 90 may include but is not limited to: one or more processors or processing units 906, a system memory 910, and a bus 908 connecting different system components (including the system memory 910 and the processing unit 906).

The bus 908 represents one or more among multiple types of bus structures, including: a memory bus or a memory controller, a peripheral bus, an accelerated graphics port, a processor, or a local bus having any bus structure among the multiple types of bus structure. For example, the bus structure includes but is not limited to: an industry standard architecture (ISA) bus, a micro channel architecture (MAC) bus, an enhanced ISA bus, a video electronics standards association (VESA) local bus and a peripheral component interconnection (PCI) bus.

The computer device 90 typically includes multiple computer readable storage media. The media may be available media which can be accessed by the computer device 90, including a volatile medium, a non-volatile medium, a movable medium and a non-movable medium.

The system memory 910 may include a computer system readable medium having a volatile memory form, for example a random-access memory (RAM) 911 and/or a high-speed cache memory 912. The computer device 90 may further include other movable/non-movable, and volatile/non-volatile computer system storage medium. As an example, the storage system 913 may be configured to perform reading and writing operations on the non-movable and non-volatile magnetic medium (as not shown in FIG 6, generally referred to as "hard disk driver"). Although not shown in FIG 6, a magnetic disk driver which is configured to perform reading and writing operations on the mobile non-volatile magnetic disk (for example "floppy disk") is provided, and an optical disk driver which is configured to perform reading and writing operations on the non-volatile optical disk (for example, compact disk read only memory (CD-ROM), digital video disk read only memory (DVD-ROM), and digital video disk read only memory (DVD-ROM)). In the above cases, each driver may be connected to the bus 908 via one or more data medium interfaces. The system memory 910 may include at least one program product. The program product includes a set of (for example at least one) program modules. The program modules are configured to execute functions of the embodiment of the present disclosure.

The computer readable signal medium may be included in a baseband or serve as a part of data signals transmitted via carriers. The data signals carry computer readable program codes. The transmitted data signals include but be not limited to an electromagnetic signal, an optical signal or any combination thereof. The computer readable signal medium may be any computer readable medium other than the computer readable storage medium, and the computer readable medium may send, transfer or transmit programs which are used by a command execution system, apparatus, device or a combination thereof.

The program codes included in the computer readable medium may be transmitted through any suitable medium, including but not limited to radio, wire, cable RF, or any appropriate combination thereof.

The computer program codes for performing the operations of the present disclosure may be written through one or more types of program design language or a combination thereof. The program design language includes object-oriented program design language, such as Java, Smalltalk, C++, and further includes conventional procedural program design language such as "C" language or similar program design language. All or a part of the program codes may be executed on a user computer, the program codes may serve as an independent software package to be executed, a part of the computer codes are executed on the user computer and another part of the computer codes are executed on a remote computer, or all of the computer codes are executed by the remote computer or a server.

A program/practical tool 914 including a set of (at least one) program module 9140 may be stored in a system memory 910. The program module 9140 includes but not is limited to an operating system, one or more application programs, and other program modules and program data. Each or a combination of the program modules may include an implementation of a network environment. The program module 910 generally performs the function and/or method in the embodiment of the present disclosure.

The computer device 90 may include one or more external devices 10 (for example a keyboard, a pointing device and a display device 100), perform communication with one or more devices which can cause the user to interact with the terminal device 90, and/or perform communication with any device (for example, a network card, and modem) which can cause the computer device 90 to communicate with one or more computing devices. The communication may be performed through an input/output (I/O) interface 902. In addition, the computer device 90 may communicate, via a network adapter 900, with one or more networks (for example, local area network (LAN), wide area network (WAN), and/or public network such as the Internet). As shown in FIG 6, the network adapter 900 communicates with other modules in the computer device 90 through the bus 908. It should be understood that, although not shown in FIG 6, the computer device 90 may be used in combination with other hardware and/or software modules, including but not limited to microcodes, a device driver, a redundant processing unit, an external magnetic disk driving array, an RAID system, a tape driver and a data backup storage system.

The processing unit 906 executes the programs stored in the system memory 910, and thus performs various functional applications and voice control on an electronic device installed on a vehicle, for example, performing the method voice control for an electronic device in the above embodiments.

In order to implement the above embodiment, a non-transitory computer readable storage medium is further provided according to the present disclosure, which stores computer programs. The programs, when being executed, implement the voice control method for an electronic device described in the above embodiments.

In order to implement the above embodiments, a computer program product is further provided according to the present disclosure. The instructions stored in the computer program product, when being executed, implement the voice control method for an electronic device described above.

In the description of the present disclosure, reference throughout this specification to "an embodiment," "some embodiments," "example," "a specific example," or "some examples," means that a particular feature, structure, material, or characteristic described in connection with the embodiment or example is included in at least one embodiment or example of the present disclosure. In the specification, the terms mentioned above are not necessarily referring to the same embodiment or example of the present disclosure.

Moreover, it is to be illustrated, in the description of the present disclosure, terms such as "first" and "second" are used herein for purposes of description and are not intended to indicate or imply relative importance or significance. Thus, a feature defined with "first" and "second" can indicate or imply at least one feature are included. Furthermore, in the description of the present disclosure, a term of "a plurality of" means two or more than two, unless specified otherwise.

Any procedure or method described in the flow charts or described in any other way herein may be understood to comprise one or more modules, portions or parts for storing executable codes that realize particular logic functions or procedures.

The logic and/or steps represented in the flow chart or otherwise described herein, for example, considered as an ordered list of executable instructions for implementing logical functions, may be embodied in any computer readable medium, to be used or used in conjunction with an instruction execution system, apparatus, or device (e.g., a computer-based system, a system including a processor, or other system that can extract instructions and execute instructions from an instruction execution system, apparatus, or device). For the purposes of this specification, a "computer-readable medium" can be any apparatus that can contain, store, communicate, propagate, or transport a program to be used or used in conjunction with an instruction execution system, apparatus, or device. More specific examples (non-exhaustive list) of computer readable media include the following: electrical connections (electronic devices) having one or more wires, portable computer disk cartridges (magnetic devices), random access memory (RAM), read only memory (ROM), erasable editable read only memory (EPROM or flash memory), fiber optic devices, and portable compact disk read only memory (CDROM). In addition, the computer readable medium may even be a paper or other suitable medium on which the program can be printed, as the program can be acquired in electronic way by optically scanning the paper or other medium, then editing, interpreting or handling in other appropriate manner when necessary, and the program is stored in computer memory.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc. Although explanatory embodiments have been illustrated and described, it would be appreciated by those skilled in the art that the above embodiments are exemplary and cannot be construed to limit the present disclosure, and changes, modifications, alternatives and varieties can be made in the embodiments by those skilled in the art without departing from the scope of the present disclosure as defined by the appended claims.

## Claims

1. A voice control method for an electronic device comprising a loudspeaker and a microphone, the method comprising:
receiving (101) a first command;
entering (101) a music mode in response to the first command;
launching (102) a full-duplex listening state of the electronic device in response to that the electronic device enters the music mode, in which in the full-duplex listening state, the electronic device recognizes user commands including no wake-up language, and the loudspeaker and the microphone both operate;
acquiring (103) a user command, comprising: collecting (203) sound received by the microphone, in which the sound comprises user voice information and currently-played music, the currently-played music being played by the loudspeaker, acquiring (203) currently-played music information, separating (203) the user voice information from the sound according to the currently-played music information, and recognizing (203) the user command from the user voice information;
executing (104) the user command in a case that the user command is relevant to the music mode; and
displaying (204) the user command on a display screen of the electronic device after acquiring (103),
wherein the user command is displayed with a first color in case that the user command is relevant to the music mode; and the user command is displayed with a second color in case that the user command is irrelevant to the music mode, wherein the first color is darker than the second color.

2. The method of claim 1, wherein the first command comprises an operation of pressing a playing button on the electronic device or a voice-based command; and the electronic device is in a wake-up state when receiving the first command.

3. The method of claim 1 or 2, further comprising:
discarding (105) the user command in case that the user command is irrelevant to the music mode.

4. The method of any one of claims 1 to 3, further comprising:
exiting (106) the full-duplex listening state after a predetermined period of time.

5. The method of claim 4, further comprising:
acquiring another user command;
determining whether the another user command comprises wake-up language for waking up the electronic device; and
in response to that the another user command comprises wake-up language, executing the another user command.

6. The method of claim 4, wherein the predetermined period of time ranges from 20 seconds to 40 seconds.

7. A voice control apparatus for an electronic device, comprising a loudspeaker and a microphone, the apparatus comprising:
a receiving module (401), configured to receive a first command, and enter a music mode in response to the first command;
a launching module (402), configured to launch a full-duplex listening state of the electronic device in response to that the electronic device enters the music mode, in which in the full-duplex listening state, the electronic device recognizes a user command including no wake-up language, and the loudspeaker and the microphone both operate;
an acquiring module (403), configured to acquire the user command in the full-duplex listening state, in which the acquiring module (403) is configured to acquire the user command in the full-duplex listening state by: collecting (203) sound received by the microphone, in which the sound comprises user voice information and currently-played music, the currently-played music being is played by the loudspeaker, acquiring (203) currently-played music information of the electronic device, separating (203) the user voice information from the sound according to the currently-played music information, and recognizing (203) the user command from the user voice information;
a processing module (404), configured to execute the user command in a case that the user command is relevant to the music mode; and
a displaying module (408) configured to display the user command on a display screen of the electronic device after acquiring (103) the user command,
wherein the user command is displayed with a first color in case that the user command is relevant to the music mode; and the user command is displayed with a second color in case that the user command is irrelevant to the music mode, wherein the first color is darker than the second color.

8. The apparatus of claim 7, wherein the processing module (404) is further configured to discard the user command in case that the user command is irrelevant to the music mode

9. The apparatus of claims 7 or 8, further comprising:
an existing module (405), configured to exit the full-duplex listening state after a predetermined period of time.

10. The apparatus of any one of claims 7 to 9, further comprising:
an acquiring and recognizing module (406) configured to acquire another user command, and determine whether the another user command comprises wake-up language for waking up the electronic device; and
an executing module (407) configured to execute the another user command in response to that the another user command includes wake-up language.

11. A non-transitory computer readable storage medium storing computer program which, when executed by a processor, cause the processor to carry out the voice control method for an electronic device according to any one of claims 1 to 6.

## Patentansprüche

1. Sprachsteuerungsverfahren für eine elektronische Vorrichtung, die einen Lautsprecher und ein Mikrofon umfasst, wobei das Verfahren folgende Schritte umfasst:
Empfangen (101) eines ersten Befehls;
Übergehen (101) in einen Musikmodus als Reaktion auf den ersten Befehl;
Starten (102) eines Vollduplex-Hörzustands der elektronischen Vorrichtung als Reaktion darauf, dass die elektronische Vorrichtung in den Musikmodus übergeht, wobei im Vollduplex-Hörzustand die elektronische Vorrichtung Nutzerbefehle erkennt, die keine Aufwachsprache umfassen, und sowohl der Lautsprecher als auch das Mikrofon in Betrieb sind;
Erfassen (103) eines Nutzerbefehls, umfassend: Aufzeichnen (203) von von dem Mikrofon empfangenem Ton, wobei der Ton Nutzersprachinformationen und gerade gespielte Musik umfasst, wobei die gerade gespielte Musik von dem Lautsprecher gespielt wird, Erfassen (203) von Informationen von gerade gespielter Musik, Trennen (203) der Nutzersprachinformationen von dem Ton gemäß den Informationen von gerade gespielter Musik und Erkennen (203) des Nutzerbefehls aus den Nutzersprachinformationen;
Ausführen (104) des Nutzerbefehls, falls der Nutzerbefehl relevant für den Musikmodus ist; und
Anzeigen (204) des Nutzerbefehls auf einem Bildschirm der elektronischen Vorrichtung nach dem Erfassen (103),
wobei der Nutzerbefehl mit einer ersten Farbe angezeigt wird, falls der Nutzerbefehl relevant für den Musikmodus ist;
und wobei der Nutzerbefehl mit einer zweiten Farbe angezeigt wird, falls der Nutzerbefehl irrelevant für den Musikmodus ist, wobei die erste Farbe dunkler als die zweite Farbe ist.

2. Verfahren nach Anspruch 1, wobei der erste Befehl einen Vorgang des Drückens einer Abspieltaste auf der elektronischen Vorrichtung oder einen sprachbasierten Befehl umfasst; und wobei die elektronische Vorrichtung in einem Aufweckzustand ist, wenn sie den ersten Befehl empfängt.

3. Verfahren nach Anspruch 1 oder 2, des Weiteren den folgenden Schritt umfassend:
Verwerfen (105) des Nutzerbefehls, falls der Nutzerbefehl irrelevant für den Musikmodus ist.

4. Verfahren nach einem der Ansprüche 1 bis 3, des Weiteren den folgenden Schritt umfassend:
Verlassen (106) des Vollduplex-Hörzustands nach einer vorbestimmten Zeitspanne.

5. Verfahren nach Anspruch 4, des Weiteren folgende Schritte umfassend:
Erfassen eines weiteren Nutzerbefehls;
Bestimmen, ob der weitere Nutzerbefehl Aufwachsprache zum Aufwecken der elektronischen Vorrichtung umfasst; und
als Reaktion darauf, dass der weitere Nutzerbefehl Aufwachsprache umfasst, Ausführen des weiteren Nutzerbefehls.

6. Verfahren nach Anspruch 4, wobei die vorbestimmte Zeitspanne von 20 Sekunden bis 40 Sekunden reicht.

7. Sprachsteuerungseinrichtung für eine elektronische Vorrichtung, die einen Lautsprecher und ein Mikrofon umfasst, wobei die Einrichtung Folgendes umfasst:
ein Empfangmodul (401), das dazu ausgebildet ist, einen ersten Befehl zu empfangen und als Reaktion auf den ersten Befehl in einen Musikmodus überzugehen;
ein Startmodul (402), das dazu ausgebildet ist, als Reaktion darauf, dass die elektronische Vorrichtung in den Musikmodus übergeht, einen Vollduplex-Hörzustand der elektronischen Vorrichtung zu starten, wobei im Vollduplex-Hörzustand die elektronische Vorrichtung einen Nutzerbefehl erkennt, der keine Aufwachsprache umfasst, und sowohl der Lautsprecher als auch das Mikrofon in Betrieb sind;
ein Erfassungsmodul (403), das dazu ausgebildet ist, den Nutzerbefehl in dem Vollduplex-Hörzustand zu erfassen, wobei das Erfassungsmodul (403) dazu ausgebildet ist, den Nutzerbefehl in dem Vollduplex-Hörzustand durch folgende Schritte zu erfassen: Aufzeichnen (203) von dem Mikrofon empfangenem Ton, wobei der Ton Nutzersprachinformationen und gerade gespielte Musik umfasst, wobei die gerade gespielte Musik von dem Lautsprecher gespielt wird, Erfassen (203) von Informationen von gerade gespielter Musik der elektronischen Vorrichtung, Trennen (203) der Nutzersprachinformationen von dem Ton gemäß den Informationen von gerade gespielter Musik und Erkennen (203) des Nutzerbefehls aus den Nutzersprachinformationen;
ein Verarbeitungsmodul (404), das dazu ausgebildet ist, den Nutzerbefehl auszuführen, falls der Nutzerbefehl relevant für den Musikmodus ist; und ein Anzeigemodul (408), das dazu ausgebildet ist, den Nutzerbefehl nach dem Erfassen (103) des Nutzerbefehls auf einem Bildschirm der elektronischen Vorrichtung anzuzeigen,
wobei der Nutzerbefehl mit einer ersten Farbe angezeigt wird, falls der Nutzerbefehl relevant für den Musikmodus ist; und wobei der Nutzerbefehl mit einer zweiten Farbe angezeigt wird, falls der Nutzerbefehl irrelevant für den Musikmodus ist, wobei die erste Farbe dunkler als die zweite Farbe ist.

8. Einrichtung nach Anspruch 7, wobei das Verarbeitungsmodul (404) des Weiteren dazu ausgebildet ist, den Nutzerbefehl zu verwerfen, falls der Nutzerbefehl irrelevant für den Musikmodus ist.

9. Einrichtung nach Anspruch 7 oder 8, des Weiteren umfassend:
ein Verlassmodul (405), das dazu ausgebildet ist, den Vollduplex-Hörzustand nach einer vorbestimmten Zeitspanne zu verlassen.

10. Einrichtung nach einem der Ansprüche 7 bis 9, des Weiteren umfassend:
ein Erfassungs- und Erkennungsmodul (406), das dazu ausgebildet ist, einen weiteren Nutzerbefehl zu erfassen und zu bestimmen, ob der weitere Nutzerbefehl Aufwachsprache zum Aufwecken der elektronischen Vorrichtung umfasst; und
ein Ausführmodul (407), das dazu ausgebildet ist, als Reaktion darauf, dass der weitere Nutzerbefehl Aufwachsprache umfasst, den weiteren Nutzerbefehl auszuführen.

11. Nicht-transitorisches computerlesbares Speichermedium, das Computerprogramme speichert, welche, wenn sie von einem Prozessor ausgeführt werden, bewirken, dass der Prozessor das Sprachsteuerungsverfahren für eine elektronische Vorrichtung nach einem der Ansprüche 1 bis 6 durchführt.

## Revendications

1. Procédé de commande vocale pour un dispositif électronique comprenant un haut-parleur et un microphone, le procédé comprenant les étapes suivantes :
recevoir (101) une première commande ;
entrer (101) dans un mode musique en réponse à la première commande ;
lancer (102) un état d'écoute en duplex intégral du dispositif électronique en réponse au fait que le dispositif électronique entre dans le mode musique, dans lequel, dans l'état d'écoute en duplex intégral, le dispositif électronique reconnaît des commandes d'utilisateur qui ne comprennent pas de parole de réveil et tant le haut-parleur que le microphone fonctionnent ;
acquérir (103) une commande d'utilisateur : collecter (203) du son reçu par le microphone, dans lequel le son comprend des informations vocales d'utilisateur et de la musique jouée en ce moment, dans lequel la musique jouée en ce moment est jouée par le haut-parleur, acquérir (203) des informations de la musique jouée en ce moment, séparer (203) les informations vocales d'utilisateur du son selon les informations de la musique jouée en ce moment, et reconnaître (203) la commande d'utilisateur à partir des informations vocales d'utilisateur ;
exécuter (104) la commande d'utilisateur si la commande d'utilisateur est pertinente pour le mode musique ; et
afficher (204) la commande d'utilisateur sur un écran d'affichage du dispositif électronique après l'acquisition (103),
dans lequel la commande d'utilisateur est affichée avec une première couleur si la commande d'utilisateur est pertinente pour le mode musique ;
et dans lequel la commande d'utilisateur est affichée avec une deuxième couleur si la commande d'utilisateur n'est pas pertinente pour le mode musique, dans lequel la première couleur est plus foncée que la deuxième couleur.

2. Procédé selon la revendication 1, dans lequel la première commande comprend une opération d'appuyer sur un bouton de lecture sur le dispositif électronique ou une commande basée sur la voix ; et dans lequel le dispositif électronique est dans un état de réveil lorsqu'il reçoit la première commande.

3. Procédé selon la revendication 1 ou 2, comprenant en outre l'étape suivante :
rejeter (105) la commande d'utilisateur si la commande d'utilisateur n'est pas pertinente pour le mode musique.

4. Procédé selon l'une quelconque des revendications 1 à 3, comprenant en outre l'étape suivante :
sortir (106) de l'état d'écoute en duplex intégral après une période de temps prédéterminée.

5. Procédé selon la revendication 4, comprenant en outre les étapes suivantes :
acquérir une autre commande d'utilisateur ;
déterminer si l'autre commande d'utilisateur comprend une parole de réveil pour réveiller le dispositif électronique ; et
en réponse au fait que l'autre commande d'utilisateur comprend une parole de réveil, exécuter l'autre commande d'utilisateur.

6. Procédé selon la revendication 4, dans lequel la période de temps prédéterminée va de 20 secondes à 40 secondes.

7. Appareil de commande vocale pour un dispositif électronique qui comprend un haut-parleur et un microphone, l'appareil comprenant :
un module de réception (401) configuré pour recevoir une première commande et pour entrer dans un mode musique en réponse à la première commande ;
un module de réception (402) configuré pour lancer un état d'écoute en duplex intégral du dispositif électronique en réponse au fait que le dispositif électronique entre dans le mode musique, dans lequel, dans l'état d'écoute en duplex intégral, le dispositif électronique reconnaît une commande d'utilisateur qui ne comprend pas de parole de réveil et tant le haut-parleur que le microphone fonctionnent ;
un module d'acquisition (403) configuré pour acquérir la commande d'utilisateur dans l'état d'écoute en duplex intégral, dans lequel le module d'acquisition (403) est configuré pour acquérir la commande d'utilisateur dans l'état d'écoute en duplex intégral par les étapes suivantes : collecter (203) du son reçu par le microphone, dans lequel le son comprend des informations vocales d'utilisateur et de la musique jouée en ce moment, dans lequel la musique jouée en ce moment est jouée par le haut-parleur, acquérir (203) des informations de la musique jouée en ce moment du dispositif électronique, séparer (203) les informations vocales d'utilisateur du son selon les informations de la musique jouée en ce moment, et
reconnaître (203) la commande d'utilisateur à partir des informations vocales d'utilisateur ;
un module de traitement (404) configuré pour exécuter la commande d'utilisateur si la commande d'utilisateur est pertinente pour le mode musique ; et
un module d'affichage (408) configuré pour afficher la commande d'utilisateur sur un écran d'affichage du dispositif électronique après l'acquisition (103) de la commande d'utilisateur,
dans lequel la commande d'utilisateur est affichée avec une première couleur si la commande d'utilisateur est pertinente pour le mode musique ; et dans lequel la commande d'utilisateur est affichée avec une deuxième couleur si la commande d'utilisateur n'est pas pertinente pour le mode musique, dans lequel la première couleur est plus foncée que la deuxième couleur.

8. Appareil selon la revendication 7, dans lequel le module de traitement (404) est en outre configuré pour rejeter la commande d'utilisateur si la commande d'utilisateur n'est pas pertinente pour le mode musique.

9. Appareil selon la revendication 7 ou 8, comprenant en outre :
un module de sortie (405) configuré pour sortir de l'état d'écoute en duplex intégral après une période de temps prédéterminée.

10. Appareil selon l'une quelconque des revendications 7 à 9, comprenant en outre :
un module (406) d'acquisition et de reconnaissance configuré pour acquérir une autre commande d'utilisateur et déterminer si l'autre commande d'utilisateur comprend une parole de réveil pour réveiller le dispositif électronique ; et
un module d'exécution (407) configuré pour exécuter l'autre commande d'utilisateur en réponse au fait que l'autre commande d'utilisateur comprend une parole de réveil.

11. Support de stockage lisible par ordinateur et non transitoire qui stocke des programmes d'ordinateur qui, lorsqu'ils sont exécutés par un processeur, amènent le processeur à effectuer le procédé de commande vocale pour un dispositif électronique selon l'une quelconque des revendications 1 à 6.
